# EUROPÄISCHE PATENTSCHRIFT

(11) **EP 2 518 383 B1**
(45) Veröffentlichungstag und Bekanntmachung des Hinweises auf die Patenterteilung: **27.02.2019**
(21) Anmeldenummer: 12162828.3
(22) Anmeldetag: 02.04.2012
(51) Int. Cl.: F16L 11/12, F16L 11/08

(54) **Temperierbare Rohrleitung für Offshoreanwendungen**
Temperature-controllable pipe for offshore applications
Conduite pouvant être tempérée pour applications offshore

(30) Priorität: 29.04.2011 DE 102011017811
(43) Veröffentlichungstag der Anmeldung: 31.10.2012
(73) Patentinhaber: Evonik Degussa GmbH, 45128 Essen (DE)
(72) Erfinder: Göring, Rainer, 46325 Borken (DE); Dowe, Andreas, 46325 Borken (DE); Kuhmann, Karl, 48249 Dülmen (DE); Gruhn, Maximilian, 45770 Marl (DE); Franosch, Juergen, 45770 Marl (DE)

(56) Entgegenhaltungen:
- EP-A1- 2 103 856
- EP-A2- 2 184 524
- WO-A1-81/01227
- US-A1- 2002 100 516

## Beschreibung

Gegenstand der vorliegenden Erfindung ist ein temperierbares, flexibles Rohr mehrschichtigen Aufbaus mit unverbundenen Schichten. Ein derartiges Rohr wird im Folgenden der Einfachheit halber und dem englischen Sprachgebrauch entsprechend als Unbonded Flexible Pipe bezeichnet. Es setzt der Diffusion von Gasen aus einem beförderten Fluid einen hohen Widerstand entgegen und kann daher zur Beförderung flüssiger oder gasförmiger Medien und mit besonderem Vorteil zur Beförderung von Rohöl oder Erdgas eingesetzt werden.

Unbonded Flexible Pipes sind als solche Stand der Technik. Derartige Rohre enthalten eine innere Auskleidung, üblicherweise in Form eines Kunststoffrohres, als Barriere gegen den Austritt des beförderten Fluids, sowie eine oder mehrere Armierungsschichten auf der Außenseite dieser inneren Auskleidung. Das Unbonded Flexible Pipe kann zusätzliche Schichten enthalten, beispielsweise eine oder mehrere Armierungsschichten auf der Innenseite der inneren Auskleidung, um das Zusammenfallen der inneren Auskleidung bei hohem Außendruck zu verhindern. Eine derartige innere Armierung wird üblicherweise als Karkasse bezeichnet. Darüber hinaus kann eine äußere Umhüllung enthalten sein, um eine Barriere gegen das Eindringen von Flüssigkeit aus der äußeren Umgebung in die Armierungsschichten oder weitere innen liegende polymere oder metallische Funktionsschichten vorzusehen. In vielen Fällen wird zwischen den äußeren Armierungsschichten eine Thermoplastschicht eingefügt, etwa in Form von gewickelten "Anti-Wear Tapes", um Abrieb an der Metallkonstruktion durch Reibung zu verhindern.

Typische Unbonded Flexible Pipes sind beispielsweise in der WO 01/61232, der US 6123114 und der US 6085799 beschrieben; sie sind darüber hinaus in API Recommended Practice 17B, "Recommended Practice for Flexible Pipe", 3. Auflage, März 2002 sowie in API Specification 17J, "Specification for Unbonded Flexible Pipe" 2. Auflage, November 1999 näher charakterisiert.

Der Ausdruck "unbonded" bedeutet in diesem Zusammenhang, dass mindestens zwei der Schichten, einschließlich Armierungsschichten und Kunststoffschichten, nicht konstruktiv miteinander verbunden sind. In der Praxis enthält das Rohr mindestens zwei Armierungsschichten, die über die Rohrlänge hinweg weder direkt noch indirekt, d. h. über weitere Schichten, miteinander verbunden sind. Dadurch wird das Rohr biegsam und ausreichend flexibel, um es für Transportzwecke aufzurollen.

Derartige Unbonded Flexible Pipes werden in verschiedenen Ausführungen in Offshore-Anwendungen sowie in verschiedenen Onshore-Anwendungen für den Transport von Flüssigkeiten, Gasen und Aufschlämmungen eingesetzt. Sie können beispielsweise für den Transport von Fluiden dort eingesetzt werden, wo über die Länge des Rohres hinweg ein sehr hoher oder ein sehr unterschiedlicher Wasserdruck existiert, etwa in Form von Steigleitungen, die vom Meeresboden hoch zu einer Einrichtung an oder nahe der Meeresoberfläche verlaufen, ferner generell als Rohre für den Transport von Flüssigkeiten oder Gasen zwischen verschiedenen Einrichtungen, als Rohre, die in großer Tiefe auf dem Meeresboden verlegt sind, oder als Rohre zwischen Einrichtungen nahe der Meeresoberfläche.

In herkömmlichen flexiblen Rohren bestehen die Armierungsschicht oder die Armierungsschichten meistens aus spiralförmig angeordneten Stahldrähten, Stahlprofilen oder Stahlbändern, wobei die einzelnen Schichten mit verschiedenen Windungswinkeln relativ zur Rohrachse ausgebildet sein können.

Die innere Auskleidung besteht im Stand der Technik üblicherweise aus einem Polyolefin wie Polyethylen, das auch vernetzt sein kann, aus einem Polyamid wie PA11 oder PA12 oder aus Polyvinylidenfluorid (PVDF). Daneben sind ein- oder mehrschichtige Auskleidungen bekannt, die auch Schichten aus anderen Materialien enthalten können.

Bei Temperaturen von unterhalb etwa 40°C können aus dem Rohöl einige Bestandteile ausfallen. Hier spielt insbesondere das Ausfallen von Wachsen und gegebenenfalls Hydraten eine Rolle, welche zu einer Verringerung des Rohrquerschnitts führen können. Um auch bei tiefen Temperaturen die Transportfunktion zu gewährleisten, sollten diese Leitungen beheizbar sein, um dieses Phänomen zu verhindern. Es gibt unterschiedliche Möglichkeiten, die Erwärmung derartiger Leitungen durchzuführen.

Die WO91/18231 beschreibt ein beheizbares flexibles Rohrsystem, welches elektrisch leitfähige Kabel enthält, die mit einer elektrisch leitfähigen Stromquelle verbunden sind und nach dem Prinzip einer Widerstandsheizung Wärme erzeugen.

Nachteilig an diesem Konzept sind das aufwendige Design und die unregelmäßige Temperierung über die Gesamtlänge.

Darüber hinaus wird in der WO 97/20162 ein flexibles Rohrsystem beschrieben, bei dem um eine flexible innere Rohrleitung mehrere kleinere Rohrleitungen platziert sind. Diese können zum Transport von Prozessmedien oder Strom genutzt werden. Denkbar wäre auch eine Temperierung des Rohrsystems, indem ein temperiertes Medium durchgeleitet wird. Die Nachteile dieses Konzepts sind ebenfalls das aufwendige Design, Wärmeverluste sowie die unregelmäßige Temperierung über die Gesamtlänge.

Andere Anmeldungen (WO 92/11487, WO 85/04941, WO 2000/66934, WO 2000/66935 und WO 2001/07824) beschäftigen sich mit dem Thema der thermischen Isolierung als passive Stabilisierung der Medientemperatur. Hier besteht aber das Problem der Kompressibilität der häufig verwendeten geschäumten Strukturen. Dies kann bei großen Wassertiefen und den damit verbundenen hohen Außendrücken zu einer Reduzierung der Isolierwirkung führen.

Eine weitere Möglichkeit zur Erwärmung wird in der WO 2006/097765, der WO 2006/090182 und der US 4 874 925 beschrieben. Es handelt sich um ein Mehrschichtrohr, in dem z. B. zwei Leiter vorhanden sind, die längs des Rohres um 180° versetzt zueinander in einer leitfähigen Schicht eingebettet sind. Aufgrund des Stromflusses von einem Leiter zum anderen erfolgt die Erwärmung in der leitfähigen Schicht. Eine Anbindung an bzw. ein gleichmäßiger Kontakt des Leiters mit der leitfähigen Schicht ist für eine gleichmäßige Erwärmung wichtig. Die leitfähige Schicht ist nach außen hin thermisch und gegebenenfalls elektrisch isoliert. Eine zusätzliche Schicht nach innen zum Rohöl ist zur elektrischen Isolierung ratsam bzw. notwendig. In der WO 2008/005829 werden heizbare Leitungen im Automobilbereich beschrieben, die eine elektrisch leitfähige Polymerschicht enthalten können; diese Schicht wirkt als Widerstandsheizung. Aus der US2002/0100516 ist ein Rohr mit einem ähnlichen Schichtaufbau bekannt, das aber nicht beheizt ist.

Die Aufgabe der Erfindung bestand darin, ein flexibles Rohr mehrschichtigen Aufbaus bereitzustellen, bei dem das geförderte Medium ohne nennenswerten zusätzlichen konstruktiven Aufwand elektrisch geheizt werden kann. Dabei sollte es möglich sein, die Rohrleitung gezielt nur in den Rohrabschnitten zu heizen, wo es konkret erforderlich ist.

Diese Aufgabe wurde durch ein flexibles Rohr gemäß Anspruch 1 gelöst. Dieses enthält von innen nach außen folgende Schichten:
- eine innere Auskleidung,
- mindestens zwei Armierungsschichten aus Metall sowie
- eine äußere Umhüllung,
wobei sich zusätzlich zwischen zwei Armierungsschichten eine Schicht aus einer elektrisch leitfähigen Kunststoffformmasse befindet, die in elektrischem Kontakt mit den beiden Armierungsschichten steht, und die beiden Armierungsschichten an eine elektrische Stromquelle angeschlossen sind. Zweckmäßigerweise enthalten sie Anschlüsse hierfür.

Die innere Auskleidung ist üblicherweise ein Kunststoffrohr, das eine Barriere gegen den Austritt des beförderten Fluids darstellt. Je nach anwendungstechnischen Erfordernissen kann es einschichtig sein oder auch aus mehreren Schichten aus jeweils unterschiedlichen Formmassen bestehen. In diesem Fall ist es beispielsweise zweischichtig, dreischichtig, vierschichtig oder es besteht im Einzelfall auch aus noch mehr Schichten. Derartige Auskleidungen sind Stand der Technik. Die innere Auskleidung kann in einer weiteren Ausführungsform auch aus einem gewellten, dünnwandigen Metallrohr bestehen.

Die Armierungsschichten bestehen aus spiralförmig angeordneten Stahldrähten, Stahlprofilen oder Stahlbändern. Die Ausführung dieser Armierungsschichten ist Stand der Technik. Vorzugsweise ist mindestens eine dieser Armierungsschichten so aufgebaut, dass sie dem Innendruck standhält, und mindestens eine weitere dieser Armierungsschichten ist so aufgebaut, dass sie Zugkräften standhält. Üblicherweise liegen mehr als zwei Armierungsschichten vor. An die Armierungsschichten schließt sich eine äußere Umhüllung an, üblicherweise in Form eines Rohres oder Schlauches aus einer thermoplastischen Formmasse oder einem Elastomer.

In einer möglichen Ausführungsform befindet sich auf der inneren Seite der inneren Auskleidung des Unbonded Flexible Pipes eine Karkasse. Derartige Karkassen und ihre Ausführung sind Stand der Technik. In einer weiteren möglichen Ausführungsform enthält das Unbonded Flexible Pipe keine Karkasse, vor allem dann, wenn es nicht unter hohen Außendrucken betrieben werden soll.

Die Schicht aus einer elektrisch leitfähigen Kunststoffformmasse, die erfindungsgemäß zwischen zwei Armierungsschichten angeordnet ist, kann entweder auf die innere der beiden Armierungsschichten aufextrudiert sein, beispielsweise durch Wickelextrusion, oder sie kann durch Aufwickeln eines vorgefertigten Tapes gebildet werden. Im Einzelfall kann das Unbonded Flexible Pipe auch mehrere solcher Schichten aus einer elektrisch leitfähigen Kunststoffformmasse zwischen jeweils zwei Armierungsschichten enthalten.

Geeignete Materialien für die elektrisch leitfähige Kunststoffformmasse sind Formmassen beispielsweise auf Basis von olefinischen Polymeren, Polyamiden, Fluorpolymeren, Polyethylen-2,6-naphthalat, Polybutylen-2,6-naphthalat, Polyphenylsulfon, Polyarylenetherketonen, Polyphenylensulfid oder einem Polyarylenetherketon/Polyphenylensu lfid-Blend.

Das für die elektrisch leitfähige Kunststoffformmasse verwendete olefinische Polymer kann in erster Linie ein Polyethylen, insbesondere ein Polyethylen hoher Dichte (HDPE), oder ein isotaktisches oder syndiotaktisches Polypropylen sein. Das Polypropylen kann ein Homo- oder ein Copolymer sein, beispielsweise mit Ethylen oder 1-Buten als Comonomer, wobei Random- als auch Blockcopolymere eingesetzt werden können. Darüber hinaus kann das Polypropylen auch schlagzähmodifiziert sein, beispielsweise dem Stand der Technik entsprechend mittels Ethylen-Propylen-Kautschuk (EPM) oder EPDM. Das ebenfalls erfindungsgemäß verwendbare syndiotaktische Polystyrol kann auf bekannte Weise durch metallocenkatalysierte Polymerisation von Styrol hergestellt werden.

Das für die elektrisch leitfähige Kunststoffformmasse verwendete Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA6 oder PA66. In einer bevorzugten Ausführungsform enthalten die Monomereinheiten des Polyamids im Mittel mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können.

Als Polyamid kann vorteilhafterweise auch ein teilaromatisches Polyamid verwendet werden, dessen Dicarbonsäureanteil zu 5 bis 100 Mol-% von aromatischer Dicarbonsäure mit 8 bis 22 C-Atomen herrührt und das einen Kristallitschmelzpunkt Tₘ von mindestens 260 °C, vorzugsweise von mindestens 270 °C und besonders bevorzugt von mindestens 280 °C besitzt. Derartige Polyamide werden üblicherweise als PPA bezeichnet. Sie sind herstellbar aus einer Kombination von Diamin und Dicarbonsäure, gegebenenfalls unter Zusatz einer ω-Aminocarbonsäure oder dem entsprechenden Lactam. Geeignete Typen sind beispielsweise PA66/6T, PA6/6T, PA6T/MPMDT (MPMD steht für 2-Methylpentamethylendiamin), PA9T, PA10T, PA11T, PA12T, PA14T sowie Copolykondensate dieser letzten Typen mit einem aliphatischen Diamin und einer aliphatischen Dicarbonsäure oder mit einer ω-Aminocarbonsäure bzw. einem Lactam.

Neben Polyamid kann die Formmasse weitere Komponenten enthalten wie z.B. Schlagzähmodifikatoren, andere Thermoplaste, Weichmacher und andere übliche Zusatzstoffe. Erforderlich ist nur, dass das Polyamid die Matrix der Formmasse bildet.

Das für die elektrisch leitfähige Kunststoffformmasse verwendete Fluorpolymer kann beispielsweise ein Polyvinylidenfluorid (PVDF), ein Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), ein Ethylen-Chlortrifluorethylen-Copolymer (E-CTFE), ein Polychlortrifluorethylen (PCTFE), ein Chlortrifluorethylen-Perfluoralkylvinylether-Tetrafluorethylen-Copolymer (CPT), ein Tetrafluorethylen-Hexafluorpropen-Copolymer (FEP) oder ein Tetrafluorethylen-Perfluoralkylvinylether-Copolymer (PFA) sein. In Frage kommen auch Copolymere auf Basis von Vinylidenfluorid, die bis zu 40 Gew.-% andere Monomere aufweisen wie beispielsweise Trifluorethylen, Chlortrifluorethylen, Ethylen, Propen und Hexafluorpropen.

Polyphenylsulfon (PPSU) wird beispielsweise unter dem Handelsnamen Radel® von Solvay Advanced Polymers produziert. Es kann aus 4,4'-Dihydroxybiphenyl und 4,4'-Dihydroxydiphenylsulfon durch nucleophile Substitution hergestellt werden. Insbesondere ist auch ein PPSU/Fluorpolymer-Blend geeignet, beispielsweise ein PPSU/PTFE-Blend.

Das ebenfalls verwendbare Polyarylenetherketon enthält Einheiten der Formeln

(-Ar-X-) und (-Ar'-Y-),

wobei Ar und Ar' einen zweiwertigen aromatischen Rest darstellen, vorzugsweise 1,4-Phenylen, 4,4'-Biphenylen sowie 1,4-, 1,5- oder 2,6-Naphthylen. X ist eine elektronenziehende Gruppe, bevorzugt Carbonyl oder Sulfonyl, während Y eine andere Gruppe wie O, S, CH₂, Isopropyliden oder dergleichen darstellt. Hierbei stellen mindestens 50 %, bevorzugt mindestens 70 % und besonders bevorzugt mindestens 80 % der Gruppen X eine Carbonylgruppe dar, während mindestens 50 %, bevorzugt mindestens 70 % und besonders bevorzugt mindestens 80 % der Gruppen Y aus Sauerstoff bestehen.

In der bevorzugten Ausführungsform bestehen 100 % der Gruppen X aus Carbonylgruppen und 100 % der Gruppen Y aus Sauerstoff. In dieser Ausführungsform kann das Polyarylenetherketon beispielsweise ein Polyetheretherketon (PEEK; Formel I), ein Polyetherketon (PEK; Formel II), ein Polyetherketonketon (PEKK; Formel III) oder ein Polyetheretherketonketon (PEEKK; Formel IV) sein, jedoch sind natürlich auch andere Anordnungen der Carbonyl- und Sauerstoffgruppen möglich.

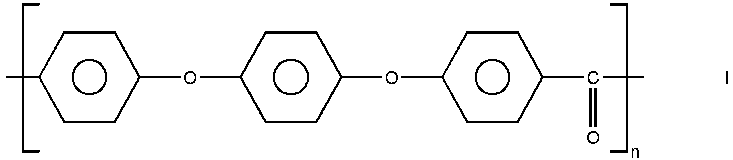

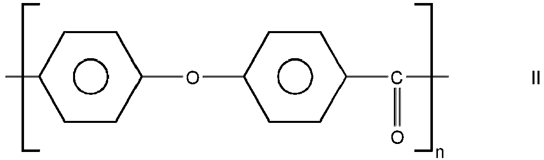

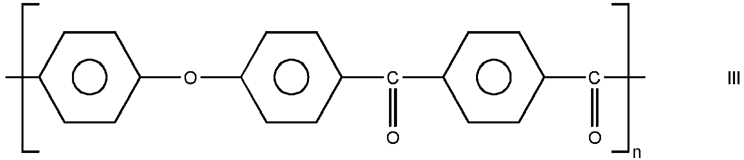

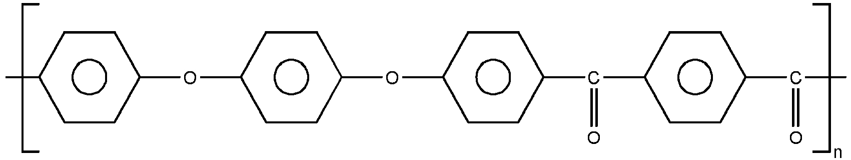

Das Polyarylenetherketon ist teilkristallin, was sich beispielsweise in der DSC-Analyse durch Auffinden eines Kristallitschmelzpunkts Tₘ äußert, der größenordnungsmäßig in den meisten Fällen um 300 °C oder darüber liegt.

Das für die elektrisch leitfähige Kunststoffformmasse verwendete Polyphenylensulfid enthält Einheiten der Formel

(-C₆H₄-S-);

vorzugsweise besteht es zu mindestens 50 Gew.-%, mindestens 70 Gew.-% bzw. mindestens 90 Gew.-% aus diesen Einheiten. Die restlichen Einheiten können solche sein, wie sie oben im Falle des Polyarylenetherketons angegeben sind, oder tri- oder tetrafunktionelle Verzweigereinheiten, die aus der Mitverwendung beispielsweise von Trichlorbenzol oder Tetrachlorbenzol bei der Synthese resultieren. Polyphenylensulfid ist in einer Vielzahl von Typen bzw. Formmassen handelsüblich.

Bei den Polyarylenetherketon/Polyphenylensulfid-Blends können beide Komponenten in jedem denkbaren Mischungsverhältnis vorliegen, so dass der Zusammensetzungsbereich von reinem Polyarylenetherketon bis zu reinem Polyphenylensulfid lückenlos überstrichen wird. Im Allgemeinen enthält das Blend mindestens 0,01 Gew.-% Polyarylenetherketon bzw. mindestens 0,01 Gew.-% Polyphenylensulfid.

Die elektrisch leitfähige Kunststoffformmasse kann die üblichen Hilfs- und Zusatzstoffe sowie gegebenenfalls weitere Polymere enthalten, im Falle des Polyarylenetherketons beispielsweise Fluorpolymere wie PFA (ein Copolymer aus Tetrafluorethen und Perfluorvinylmethylether), Polyimid, Polyetherimid, LCP wie beispielsweise flüssigkristalliner Polyester, Polysulfon, Polyethersulfon, Polyphenylsulfon, Polybenzimidazol (PBI) oder weitere hochtemperaturbeständige Polymere, im Falle des Polyphenylensulfids beispielsweise Copolymere bzw. Terpolymere von Ethylen mit polaren Comonomeren und im Falle des teilaromatischen Polyamids ein aliphatisches Polyamid. Die Polyamidformmasse kann beispielsweise auch einen Hydrolysestabilisator, einen Weichmacher bzw. Schlagzähmodifikatoren enthalten. Die Formmasse kann darüber hinaus ein Schmiermittel wie Graphit, Molybdändisulfid, hexagonales Bornitrid oder PTFE enthalten. Der Anteil der Basispolymeren sowie im bevorzugten Fall der Anteil an olefinischem Polymer, Polyamid, Fluorpolymer, Polyethylen-2,6-naphthalat, Polybutylen-2,6-naphthalat, Polyphenylsulfon, Polyarylenetherketon, Polyphenylensulfid beziehungsweise Polyarylenetherketon/Polyphenylensulfid-Blend an der Formmasse beträgt mindestens 50 Gew.-%, bevorzugt mindestens 60 Gew.-%, besonders bevorzugt mindestens 70 Gew.-%, insbesondere bevorzugt mindestens 80 Gew.-% und ganz besonders bevorzugt mindestens 90 Gew.-%.

Die elektrische Leitfähigkeit dieser Kunststoffformmasse wird auf bekannte Weise erreicht, beispielsweise durch Zusatz von Leitfähigkeitsruß, Graphitpulver und/oder Graphitfibrillen. Der spezifische Durchgangswiderstand gemäß IEC 60093 dieser Kunststoffformmasse liegt im Bereich von 10⁻³ bis 10¹⁰ Ωm, vorzugsweise im Bereich von 10⁻² bis 10⁸ Ωm, besonders bevorzugt im Bereich von 10⁻¹ bis 10⁷ Ωm und insbesondere bevorzugt im Bereich von 10° bis 10⁶ Ωm.

Wenn die elektrisch leitfähige Schicht aufextrudiert wird, beträgt ihre Dicke etwa 0,05 bis 50 mm, vorzugsweise 0,1 bis 20 mm, besonders bevorzugt 0,2 bis 10 mm und insbesondere bevorzugt 0,4 bis 6 mm.

In einer anderen Ausführungsform wird ein Tape, das aus der elektrisch leitfähigen Formmasse besteht, unter Spannung auf die innere Armierungsschicht gewickelt, gegebenenfalls verschweißt und dann mit der äußeren Armierungsschicht so abgedeckt, dass vollflächiger Kontakt vorliegt.

Die Breite des Tapes ist abhängig vom Rohrdurchmesser. Übliche Breiten liegen im Bereich von etwa 20 mm bis etwa 700 mm und bevorzugt im Bereich von etwa 30 mm bis etwa 500 mm und besonders bevorzugt im Berich von etwa 40 mm bis etwa 300 mm. Die Dicke des Tapes ist dadurch eingegrenzt, dass es einerseits ausreichend mechanisch stabil sein muss und andererseits ausreichend flexibel, um sich noch gut wickeln zu lassen. In der Praxis besitzt das Tape daher üblicherweise eine Dicke im Bereich von 0,05 mm bis 5 mm und vorzugsweise im Bereich von 0,1 mm bis 3 mm.

Der Querschnitt des Tapes kann rechteckig sein. Es können sich aber auch an den Seiten Aussparungen befinden, so dass die überlappenden Bereiche ineinandergreifen und eine im Wesentlichen glatte Oberfläche der Wicklung ergeben.

Man kann das Tape aber auch überlappend wickeln; für den Überlappungsbereich ist größenordnungsmäßig etwa 10 % der Tapebreite ausreichend. Man kann jedoch auch eine erste Lage Tape auf Stoß wickeln und gegebenenfalls darüber eine zweite Lage Tape ebenfalls auf Stoß, aber um etwa eine halbe Tapebreite versetzt.

Nach dem Wickeln kann das Tape an den Überlappungsstellen miteinander verschweißt werden. Dies kann entweder durch Heißgasschweißen, durch Kontakt mit einem Heizelement oder vorteilhafterweise durch Einstrahlen elektromagnetischer Strahlung im UV-, sichtbaren oder IR-Spektralbereich geschehen. Prinzipiell reicht eine Punktschweißung zur Fixierung der Tapes aus; bevorzugt wird jedoch kontinuierlich eine ununterbrochene Schweißnaht erzeugt. Selbstverständlich kann man die Tapes in den Überlappungsbereichen auch vollflächig miteinander verschweißen.

Die Schicht aus einer leitfähigen Kunststoffformmasse kann gleichzeitig auch als Anti-Wear-Schicht fungieren. Im Stand der Technik werden Anti-Wear-Tapes zwischen den Armierungsschichten aus Stahl platziert, um einen Abrieb der Armierungsschichten zu verhindern. Dabei kommt es primär zu einem Abrieb des Tapes. Dieser Abrieb muss gegebenenfalls bei der Auslegung berücksichtigt werden, um ausreichende Heizleistung über die gesamte Lebenszeit der flexiblen Leitung zu gewährleisten.

Die beiden an diese Schicht angrenzenden Armierungsschichten können an eine elektrische Stromquelle angeschlossen werden und dienen als elektrische Leiter; der Strom fließt dann von der einen Armierungsschicht zur anderen durch die Schicht aus der elektrisch leitfähigen Kunststoffformmasse in Radialrichtung. Die anzulegende Spannung ergibt sich aus der Schichtdicke, der elektrischen Leitfähigkeit und der gewünschten Temperatur. Diese Ausführung hat den Vorteil, dass herstellungsbedingt ein guter und großflächiger Kontakt zwischen der Schicht aus der leitfähigen Kunststoffformmasse und der darunter bzw. darüber liegenden Armierungsschicht gewährleistet ist. Dies sichert einen guten Stromübergang und damit eine gute Wärmeausbeute.

Wenn die Formmasse Ruß bzw. Leitfähigkeitsruß als elektrisch leitfähigen Zusatz enthält, kann bei der Beheizung der PTC-Effekt (Positive Temperature Coefficient) ausgenutzt werden. Dieser Effekt stellt eine immanente Sicherheit dar, da er wegen der bei Erwärmung fallenden Leitfähigkeit die Temperaturerhöhung bei konstanter Spannung begrenzt. Eine thermische Schädigung der Rohrleitung oder des zu transportierenden Mediums kann hierdurch verhindert werden.

Erfindungsgemäß ist es auch möglich, die Schicht aus einer elektrisch leitfähigen Kunststoffformmasse nur in konkreten Rohrabschnitten zu platzieren. Man kann sie in dem Bereich leitend ausführen, wo eine gezielte Erwärmung benötigt wird und in anderen Bereichen des Rohres stattdessen beispielsweise ein konventionelles Anti-Wear-Tape einbringen. Ebenso kann es von Vorteil sein, nicht die gesamte Länge der Armierungsschichten unter Spannung zu setzen, sondern gezielt nur den konkreten Rohrabschnitt anzusteuern. Dies kann über hinleitende, nach außen abgeschirmte Stromleiter realisiert werden, die beispielsweise in die Rohrstruktur integriert sind.

Die leitfähige Schicht bzw. hierfür verwendete Tapes können auch mehrschichtig ausgeführt werden. Beispielsweise kann die nach außen gerichtete Seite aus einer elektrisch gut leitfähigen Schicht zur Kontaktierung bestehen, die gegebenenfalls gleichzeitig als Gleitschicht (Anti-Wear-Schicht) dient, worauf nach innen hin eine Mittelschicht mit einem Gehalt an elektrisch leitfähigen Füllstoffen folgt, der auf die gewünschte Temperatur- und Heizleistung abgestimmt ist. Die nach innen gerichtete Seite kann dann wiederum aus einer Schicht bestehen, die im Hinblick auf elektrische sowie thermische Leitfähigkeit sowie hinsichtlich des Gleit- und Verschleißverhaltens optimiert ist. Dadurch lassen sich das Problem der Oberflächenwiderstände solcher Folien lösen sowie eventuelle Kontaktverluste durch die Spalten zwischen den Metallbändern ausgleichen. Der spezifische Durchgangswiderstand gemäß IEC 60093 der gut leitenden Außenschichten kann beispielsweise etwa 10⁻³ bis 10³ Ωm betragen, während der spezifische Durchgangswiderstand der Mittelschicht beispielsweise etwa 10⁻¹ bis 10⁸ Ωm beträgt

Das flexible Rohr kann gegebenenfalls neben den hier beschriebenen Schichten weitere Schichten enthalten, beispielsweise unidirektional oder mit Gewebe verstärkte Polymerschichten, wobei eine gut wärmeleitende Carbonfaserarmierung verwendet werden kann, oder eine außenliegende Schicht zur thermischen Isolierung.

Mit Hilfe der Erfindung ist es möglich, das Rohr über der gesamten Länge oder in ausgewählten Abschnitten zu beheizen, um Ausfällungen zu verhindern. Eine thermische Schädigung des Leitungssystems und des transportierten Mediums kann hierbei vermieden werden. Die technische Umsetzung ist einfach, da keine komplizierten technischen Zusatzteile benötigt werden und der Rohraufbau als solcher nicht verändert wird. Das erfindungsgemäße Rohr lässt sich so effizient beheizen, dass es auch bei der Ölförderung in kalten Regionen, beispielsweise in der arktischen Zone, eingesetzt werden kann.

## Patentansprüche

1. Flexibles Rohr mehrschichtigen Aufbaus mit unverbundenen Schichten, und einer Stromquelle wobei mindestens zwei der Schichten nicht konstruktiv miteinander verbunden sind, wobei das Rohr von innen nach außen folgende Schichten enthält:
- eine innere Auskleidung (1),
- mindestens zwei Armierungsschichten aus Metall (2, 4), die aus spiralförmig angeordneten Stahldrähten, Stahlprofilen oder Stahlbändern bestehen, sowie
- eine äußere Umhüllung (5), wobei sich zwischen zwei Armierungsschichten (2, 4) eine Schicht (3) aus einer elektrisch leitfähigen Kunststoffformmasse befindet, die in elektrischem Kontakt mit den beiden Armierungsschichten steht, und die beiden Armierungsschichten an die elektrische Stromquelle angeschlossen sind, und der spezifische Durchgangswiderstand der elektrisch leitfähigen Kunststoffformmasse gemäß IEC 60093 im Bereich von 10⁻³ Ωm bis 10¹⁰ Ωm liegt.

2. Flexibles Rohr gemäß Anspruch 1,
**dadurch gekennzeichnet,**
**dass** die elektrisch leitfähige Kunststoffformmasse eine Formmasse auf Basis von olefinischen Polymeren, Polyamiden, Fluorpolymeren, Polyethylen-2,6-naphthalat, Polybutylen-2,6-naphthalat, Polyphenylsulfon, Polyarylenetherketon, Polyphenylensulfid oder einem Polyarylenetherketon/Polyphenylensulfid-Blend ist.

3. Flexibles Rohr gemäß einem der Ansprüche 1 und 2,
**dadurch gekennzeichnet,**
**dass** die Schicht (3) aus einer elektrisch leitfähigen Kunststoffformmasse auf die innere der beiden Armierungsschichten (2) aufextrudiert ist.

4. Flexibles Rohr gemäß einem der Ansprüche 1 und 2,
**dadurch gekennzeichnet,**
**dass** die Schicht (3) aus einer elektrisch leitfähigen Kunststoffformmasse durch Aufwickeln eines vorgefertigten Tapes gebildet ist.

5. Flexibles Rohr gemäß einem der vorhergehenden Ansprüche,
**dadurch gekennzeichnet,**
**dass** der spezifische Durchgangswiderstand der elektrisch leitfähigen Kunststoffformmasse gemäß IEC 60093 im Bereich von 10⁻¹ bis 10⁷ Ωm liegt.

6. Flexibles Rohr gemäß einem der vorhergehenden Ansprüche,
**dadurch gekennzeichnet,**
**dass** die elektrisch leitfähige Kunststoffformmasse Leitfähigkeitsruß, Graphitfibrillen und/oder Graphitpulver enthält.

7. Flexibles Rohr gemäß einem der vorhergehenden Ansprüche,
**dadurch gekennzeichnet,**
**dass** die Schicht (3) aus einer elektrisch leitfähigen Kunststoffformmasse mehrschichtig ausgeführt ist.

8. Verwendung des flexiblen Rohrs gemäß einem der vorhergehenden Ansprüche zur Beförderung von Rohöl.

9. Verfahren zur Beheizung eines flexiblen Rohrs gemäß einem der Ansprüche 1 bis 7,
**dadurch gekennzeichnet,**
**dass** die beiden Armierungsschichten (2, 4), die an die Schicht (3) aus der elektrisch leitfähigen Formmasse angrenzen, an eine elektrische Stromquelle angeschlossen werden, worauf ein Strom durch die Schicht (3) aus der elektrisch leitfähigen Formmasse fließt.

## Claims

1. Flexible pipe of multilayer structure with unbonded layers, and a source of current, wherein at least two of the layers have been designed without bonding to one another, wherein the pipe comprises the following layers, from the inside to the outside:
- an interior lining (1),
- at least two reinforcement layers made of metal (2, 4) which are composed of helically arranged steel wires, steel profiles, or steel tapes, and
- an exterior sheath (5),
wherein
between two reinforcement layers (2, 4) there is a layer(3) made of an electrically conductive plastics moulding composition which is in electrical contact with the two reinforcement layers,
and the two reinforcement layers are connected to the source of electrical current, and the volume/resistivity of the electrically conductive plastics moulding composition to IEC 600093 is in the range from 10⁻³ Ωm to 10¹⁰ Ωm.

2. Flexible pipe according to Claim 1,
**characterized in that**
the electrically conductive plastics moulding composition is a moulding composition based on olefinic polymers, on polyamides, on fluoropolymers, on polyethylene 2,6-naphthalate, on polybutylene 2,6-naphthalate, on polyphenyl sulphone, on polyarylene ether ketone, on polyphenylene sulphide, or on a polyarylene ether ketone/polyphenylene sulphide blend.

3. Flexible pipe according to Claim 1 or 2,
**characterized in that**
the layer (3) made of an electrically conductive plastics moulding composition has been applied by extrusion to the interior of the two reinforcement layers (2).

4. Flexible pipe according to Claim 1 or 2,
**characterized in that**
the layer (3) made of an electrically conductive plastics moulding composition has been formed by winding to apply a prefabricated tape.

5. Flexible pipe according to any of the preceding claims,
**characterized in that**
the volume resistivity of the electrically conductive plastics moulding composition to IEC 60093 is in the range from 10⁻1/10⁷ Ωm.

6. Flexible pipe according to any of the preceding claims,
**characterized in that**
the electrically conductive plastics moulding composition comprises conductive carbon black, graphite fibrils and/or graphite powder.

7. Flexible pipe according to any of the preceding claims,
**characterized in that**
the layer (3) made of an electrically conductive plastics moulding composition is a multilayer system.

8. Use of the flexible pipe according to any of the preceding claims for conveying crude oil.

9. Method for heating a flexible pipe according to any of Claims 1 to 7,
**characterized in that**
the two reinforcement layers (2, 4) which are adjacent to the layer made of the electrically conductive moulding composition are attached to a source of electrical current, whereupon a current flows through the layer (3) made of the electrically conductive moulding composition.

## Revendications

1. Tuyau souple d'une structure multicouche présentant des couches non liées et une source de courant, au moins deux des couches étant reliées l'une à l'autre de manière non constructive, le tuyau contenant, de l'intérieur vers l'extérieur, les couches suivantes :
- un revêtement interne (1),
- au moins deux couches d'armature en métal (2, 4) qui sont constituées par des fils d'acier, des profilés d'acier ou des feuillards d'acier agencées en forme de spirale, ainsi que
- une gaine externe (5),
une couche (3) en une masse de moulage en matériau synthétique, électriquement conductrice, se trouvant entre deux couches d'armature (2, 4) et étant en contact électrique avec les deux couches d'armature et les deux couches d'armature étant raccordées à la source de courant électrique,
et la résistivité volumique spécifique de la masse de moulage en matériau synthétique, électriquement conductrice, selon la norme IEC 60093, se situant dans la plage de 10⁻³ Ωm à 10¹⁰ Ωm.

2. Tuyau souple selon la revendication 1, **caractérisé en ce que** la masse de moulage en matériau synthétique électriquement conductrice est une masse de moulage à base de polymères oléfiniques, de polyamides, de polymères fluorés, de poly(2,6-naphtalate d'éthylène), de poly(2,6-naphtalate de butylène), de polyphénylsulfone, de polyarylène-éthercétone, de poly(sulfure de phénylène) ou d'un mélange polyarylène-éthercétone/poly(sulfure de phénylène).

3. Tuyau souple selon l'une quelconque des revendications 1 et 2, **caractérisé en ce que** la couche (3) en masse de moulage en matériau synthétique, électriquement conductrice, est extrudée sur l'intérieur des deux couches d'armature (2).

4. Tuyau souple selon l'une quelconque des revendications 1 et 2, **caractérisé en ce que** la couche (3) en masse de moulage en matériau synthétique, électriquement conductrice, est formée par enroulement d'un ruban préfabriqué.

5. Tuyau flexible selon l'une quelconque des revendications précédentes, **caractérisé en ce que** la résistivité volumique spécifique de la masse de moulage en matériau synthétique, électriquement conductrice, selon la norme IEC 60093, se site dans la plage de 10⁻¹ à 10⁷ Ωm.

6. Tuyau flexible selon l'une quelconque des revendications précédentes, **caractérisé en ce que** la masse de moulage en matériau synthétique, électriquement conductrice, contient de la suie conductrice, des fibrilles de graphite et/ou de la poudre de graphite.

7. Tuyau flexible selon l'une quelconque des revendications précédentes, **caractérisé en ce que** la couche (3) en masse de moulage en matériau synthétique, électriquement conductrice, est réalisée de manière multicouche.

8. Utilisation du tuyau flexible selon l'une quelconque des revendications précédentes pour le transport de pétrole brut.

9. Procédé pour le chauffage d'un tuyau flexible selon l'une quelconque des revendications 1 à 7, **caractérisé en ce que** les deux couches d'armature (2, 4), adjacentes à la couche (3) en masse de moulage, électriquement conductrice, sont raccordées à une source de courant électrique, suite à quoi un courant s'écoule à travers la couche (3) en masse de moulage, électriquement conductrice.
